# EUROPEAN PATENT APPLICATION

(11) **EP 2 072 210 A1**
(43) Date of publication of application: **24.06.2009**
(21) Application number: 08254025.3
(22) Date of filing: 17.12.2008
(51) Int. Cl.: B29C 45/00, B29C 45/14, B32B 3/02

(54) **Multi-layered molded article with moisture protection**

(30) Priority: 21.12.2007 CN 200710203350
(71) Applicant: FIH (Hong Kong) Limited, Hong Kong (HK)
(72) Inventor: Wu, Kun-Tsan, Shindian City Taipei Hsien Taiwan 231 (CN); Tien, Li-Wen, Shindian City Taipei Hsien Taiwan 231 (CN)
(74) Representative: Craven, Ian

(57) **Abstract**

A multi-layered molded article (100) includes a soft layer (12), a substrate (14) moldingly bonded to the soft layer, and a protective member (16) covering edges (124) of the soft layer and the molded substrate.

## Description

### 1. Field of the Invention

The present invention relates to multi-layer molded articles.

### 2. Description of related art

Molded articles, such as molded shells, are widely used in many technological fields. One example is a molded shell used with a portable electronic device (e.g., a mobile phone) for protecting internal electronic components. Another example is a molded shell used with furniture (e.g., a mini sofa) to provide decoration.

The molded shells may include a plastic substrate having some kind of decorative and/or protective (hereinafter "second") layer formed thereon. The molded shell may be made using an insert molding process. The second layer is placed in the mold cavity and then bonds to the molten plastic injected into the mold for forming the substrate.

Various difficulties may be faced when manufacturing this multi-layer molded article.

Therefore, there is room for improvement within the art.

### BRIEF DESCRIPTION OF THE DRAWINGS

Many aspects of the multi-layered molded article can be better understood with reference to the following drawings. The components in the drawings are not necessarily drawn to scale, the emphasis instead being placed upon clearly illustrating the principles of the multi-layered molded article. Moreover, in the drawings like reference numerals designate corresponding parts throughout the several views.

FIG. 1 is a perspective view of a first exemplary embodiment of a multi-layered molded article.

FIG. 2 is a cut-away view of the first exemplary embodiment of a multi-layered molded article.

FIG. 3 is a cut-away view of a second exemplary embodiment of a multi-layered molded article.

### DETAILED DESCRIPTION OF THE EXEMPLARY EMBODIMENTS

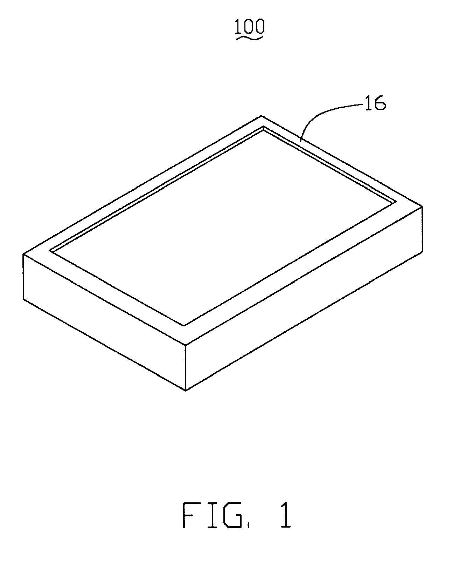

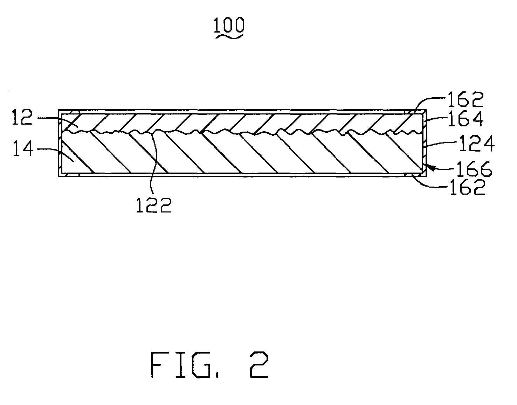

Referring to FIG. 1 and FIG. 2, in a first exemplary embodiment, a first multi-layered molded article 100 is shown. Article 100 includes a soft layer 12, a substrate 14 moldingly bonded to the soft layer 12, and a first protective member 16 covering edges 124 of the soft layer 12 and the substrate 14.

The soft layer 12 can be made of a material that is soft relative to the substrate 14. Exemplary soft materials include leather (natural and artificial), all types of fabrics, woven clothes, textiles, and nylon. One surface of the decorative layer 12 acts as a bonding surface 122. The bonding surface 122 should have a rough or coarse surface, formed by, for example, a plurality of tiny pores or projections (schematically shown) for some soft materials, the pores and projections of the bonding surface 122 may be a natural property of the material. For other soft materials, the pores and projections may be formed by grinding or sandblasting the bonding surface 122. The tiny pores and projections of the bonding surface 122 interlock with the molten material used to make substrate 14, thereby increasing the bonding of the soft layer 12 to the substrate 10.

The substrate 14 can be formed by injection molding a moldable material. The moldable material can be any of plastic, rubber, and silicone. The plastic material can be any of polyvinylchloride resin (PVC), polyethylene terephthalate (PET), acrylonitrile-butadiene-styrene (ABS), polycarbonate (PC), polyimide (PI), liquid crystal polymer (LCP), polyetherimide (PEI), polyphenylene sulfide (PPS), polystyrene (PS), polypropylene (PP). In particular, ABS and PC exhibit good adhesion to many softer materials.

The first exemplary protective member 16 has an annular configuration and is formed around the edges of the soft layer 12 and the substrate 14. The first protective member 16 includes two claw portions 162 and an annular wall portion 164 connected to the two claw portions 162. Each of the claw portions 162 extends perpendicularly from the annular wall portion 164. The two claw portions 162 and the annular wall portion 164 define an annular groove 166. The edges 124 of the soft layer 12 and the substrate 14 are received in the annular groove 166, thereby being covered by the first protective member 16. Thus, moisture is prevented from entering between the soft layer 12 and the substrate 14.

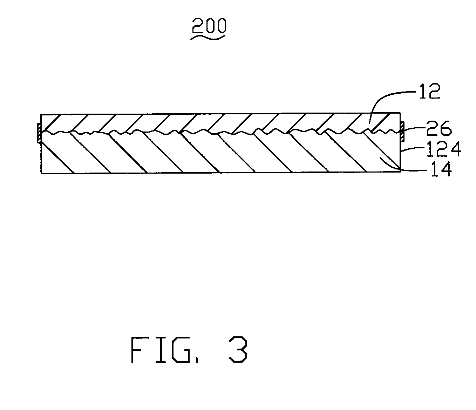

Referring to FIG. 3, in a second exemplary embodiment, a second multi-layered molded article 200 includes the soft layer 12, the substrate 14, and a second protective member 26 partially covering the edges 124 of the soft layer 12 and the substrate 14. The second protective member 26 also has an annular configuration formed around the edges of the soft layer 12 and the substrate 14. The second protective member 26 is attached to the edges 124 of the soft layer 12 and the substrate 14.

It should be also understood, however, that even though numerous characteristics and advantages of the present embodiments have been set forth in the foregoing description, together with details of the structures and functions of the embodiments, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A multi-layered molded article, comprising:
a soft layer;
a substrate moldingly bonded to the soft layer; and
a protective member covering edges of the soft layer and the substrate.

2. The multi-layered molded article as claimed in claim 1, wherein the soft layer is made of one of leather, fabrics, woven clothes, textiles, and nylon.

3. The multi-layered molded article as claimed in claim 1, wherein the soft layer has a bonding surface having a plurality of tiny pores or protrusions that interlock with the substrate.

4. The multi-layered molded article as claimed in claim 1, wherein the substrate is made of one of plastic, rubber, and silicone.

5. The multi-layered molded article as claimed in claim 1, wherein the protective member has an annular configuration formed around edges of the soft layer and the substrate.

6. The multi-layered molded article as claimed in claim 1, wherein the protective member includes two claw portions and an annular wall portion connected to the two claw portions, the two claw portions and the annular wall portion defining an annular groove, the edges of the soft layer and the substrate are received in the annular groove.

7. The multi-layered molded article as claimed in claim 1, wherein the soft layer is made of one of leather, fabrics, woven clothes, textiles, and nylon, and the substrate being made of one of acrylonitrile-butadiene-styrene and polycarbonate.
